# EUROPEAN PATENT APPLICATION

(11) **EP 1 729 040 A1**
(43) Date of publication of application: **06.12.2006**
(21) Application number: 05011956.9
(22) Date of filing: 02.06.2005
(51) Int. Cl.: F16H 61/28

(54) **Gear actuation control device**

(71) Applicant: Hoerbiger Antriebstechnik GmbH, 86956 Schongau (DE)
(72) Inventor: Koopman, Laurent, 8210 Zedelgem (BE)
(74) Representative: Schmitz, Hans-Werner

(57) **Abstract**

Gear actuation control device (100) comprising one gear actuator (1,2,3,4) per two gears (1-N-3; 7-N-5; 4-N-R; 6-N-2) of a transmission (1T - 4T), each gear actuator (1 - 4) having a movable piston (1', 2', 3', 4') disposed between two actuation chambers (1A, B; 2A, B; 3A, B; 4A,B), an actuator valve means (5), and a switching valve means (6) controlling the activation of said pistons (1' - 4') of the gear actuators (1 - 4) and cooperating with the actuator valve means (5), wherein the actuator valve means (5) comprises a number of actuator valves (7 - 10) at least equal to the number of gear actuators (1 - 4).

## Description

The invention concerns a gear actuation control device according to the preamble part of claim 1.

A known generic gear actuation control device suffers from the drawback that the reaction time upon shifting is relatively slow.

Therefore, it is an object underlying the present invention to provide a gear actuation control device according to the preamble part of claim 1 having improved operating characteristics.

The solution of this object is achieved by the features of claim 1.

Accordingly, the actuator valve means comprises a number of actuator valves that corresponds to the number of gear actuators, what results in the advantage of a faster reaction time. Moreover, both pressure chambers of each gear actuator can be operated and/or controlled, what results in the advantage that a fast reaction is possible in case a shifting operation cannot be accomplished. In such a case, the respectively other pressure chamber of the pressurized gear actuator can be operated, and thereafter the shifting operation can be repeated. This results in the further advantage that a damage of the gears of the transmission can be avoided.

The dependent claims contain advantageous embodiments of the present invention.

In particular, it is possible to provide position sensors, preferably integrated in the entire system, detecting the position of the piston in the pressure chamber of the gear actuator (preferably a double active cylinder according to the principles of the present application), with the detected position of the piston indicating whether a shifting operation has been fully accomplished, or not.

Preferably, the actuator valves of the actuator valve means take the form of proportional pressure reducing valves.

The switching valve means preferably comprises a 16/2 directional valve that is fluidly interposed between the actuator valve means and the gear actuators.

The switching valve means can be controlled in different ways, preferably fluidly by a suitable hydraulic operating valve.

In particular, in accordance with the present invention, it is possible to control the pressure/force on both sides of each gear actuator simultaneously. In such a case two actuator valves per gear actuator are needed. With the switching valve means or selector in one position it is possible to control all the odd gears and even gears, respectively. So, for controlling all of the gear actuators at the same time twice the number of actuator valves (e.g. 8 actuator valves) as the number of gear actuators (in this case 4 gear actuators) are needed.

Further features and advantages of the present application will become more apparent from the following description of the drawings, in which
- Fig. 1: is a schematically simplified block diagram of a gear actuation control device, and
- Fig. 2: is a sectional view of a specific piston arrangement according to the present invention.

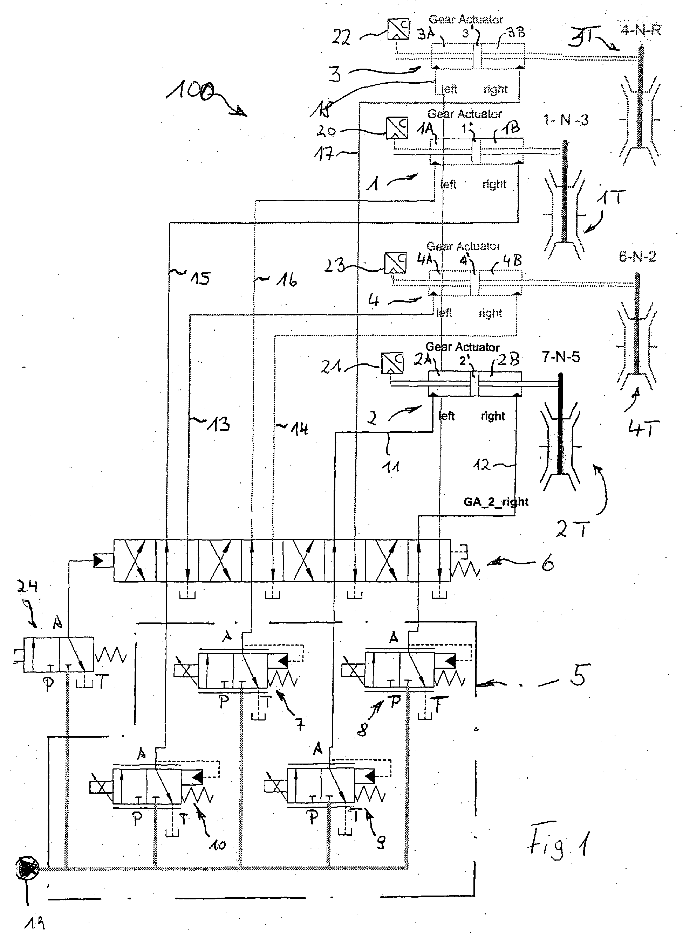

The Fig. 1 of the drawings is a schematically simplified block diagram of a gear actuation (activation) control device 100 according to the principles of the present application.

According to the detected preferred embodiment, the control device 100 comprises four gear actuators 1, 2, 3, 4, respectively per two gears. So, gear actuator 1 is responsible for the shifting position 1-N-3, gear actuator 2 for the shifting position 7-N-5, gear actuator 3 for the shifting position 4-N-R and gear actuator 4 for the shifting position 6-N-2 as has been shown in Fig. 1.

The transmission to be actuated is represented by four shifting forks 1T to 4T associated to the respective gear actuators 1, 2, 3, and 4, respectively.

Each gear actuator comprises preferably a double active cylinder having a movable piston 1', 2', 3' and 4', respectively disposed between pressure (actuator) chambers 1A, 1B, 2A, 2B, 3A, 3B and 4A, 4B, respectively as can be seen in detail from the block diagram of Fig. 1.

Moreover, there are position sensors 20 to 23 associated to the respective gear actuators 1, 2, 3, and 4, respectively.

The before-described arrangement is actuated by an actuator valve means 5 cooperating with a switching valve means 6. The entire arrangement of the before-listed components is, in turn, connected to a schematically simplified depicted pressure source 19.

The switching valve means 6 is operated preferably by a hydraulic operating valve 24 and, according to the preferred embodiment, comprises a 16/2 directional valve.

Moreover, there are pressure lines 11 and 12 leading to actuator chambers 2A and 2B, respectively. Pressure lines 13 and 14 are leading to actuator chambers 4A and 4B, respectively. Pressure lines 15 and 16 are leading to actuator chambers 1A and 1B, respectively. Finally, pressure lines 18 and 17 are leading to actuator chambers 3A and 3B, respectively of gear actuator 3.

For the sake of completeness and disclosure it is herewith explicitly made reference to the schematic diagram of the gear actuator control device 100 as clearly shown in the drawing.

According to the principles of the present application, it is possible to operate both actuator chambers of each gear actuator 1, 2, 3 and 4, respectively with four actuator valves 7, 8, 9 and 10, respectively in connection with the switching valve means 6 so that a short response time can be achieved and, in case of a shifting failure, the respective other actuator chamber of each gear actuator can shortly be actuated.

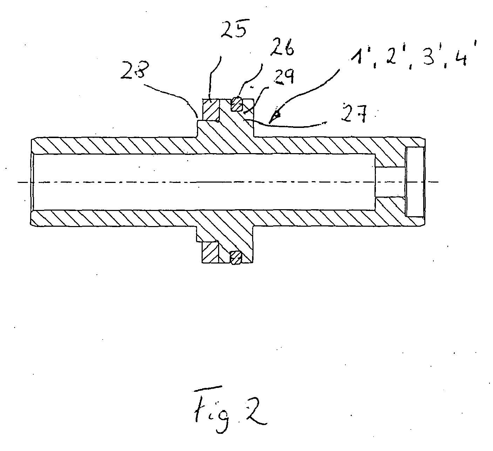

Fig. 2 shows a sectional view of a preferred embodiment of pistons 1' - 4'.

This embodiment includes a boss 27 that is provided with a circumferentially extending groove 29. A hydraulic piston seal 26 is disposed in the groove 29.

Moreover, boss 27 includes a recess 28 in which a circular magnet 25 is disposed. This magnet 25 is fixed to the bottom and wall of groove 28. So, a magnetic field is created around the piston 1', 2', 3' and 4', respectively. As the pistons can move the magnetic field moves also.

The piston is attached to the gears or transmissions 1T - 4T so that a magnetic field position can be created. A suitable position sensor, especially type PLCD, that is not depicted in Fig. 2, can thus detect the location of the magnetic field passing below it. It can generate an electric signal proportional to the position of the magnetic field within its sensing area. In combination with the magnetic field around the pistons knowledge about the gear position based on the electric signal can be obtained.

### List of reference signs

- 1 - 4: gear actuators
- 1T - 4T: transmission (four forks representing said transmission)
- 1' - 4': pistons
- 1A, B - 4A, B: actuator (pressure) chambers
- 5: actuator valve means
- 6: switching valve means
- 7 - 10: actuator valves
- 11 - 18: pressure lines
- 19: pressure source
- 20 - 23: position sensors
- 24: hydraulic operating valve
- 25: magnet
- 26: hydraulic piston seal
- 27: boss
- 28: recess
- 29: groove
- 100: gear actuator control device

## Claims

1. Gear actuation control device (100) comprising:
- one gear actuator (1, 2, 3, 4) per two gears (1-N-3; 7-N-5; 4-N-R; 6-N-2) of a transmission (IT - 4T), each gear actuator (1 - 4) having a movable piston (1', 2', 3' 4') disposed between two actuation chambers (1A, B; 2A, B; 3A, B; 4A, B);
- an actuator valve means (5); and
- a switching valve means (6) controlling the activation of said pistons (1' - 4') of the gear actuators (1 - 4) and cooperating with the actuator valve means (5); **characterized in**
- **that** the actuator valve means (5) comprises a number of actuator valves (7 - 10), at least equal to the number of gear actuators (1 - 4).

2. Gear actuation control device according to claim 1, being **characterized in that** the number of actuator valves (7 - 10) is four.

3. Gear actuation control device according to claim 1 or 2, being **characterized in that** the actuator valves (7 - 10) take the form of proportional pressure reducing valves.

4. Gear actuation control device according to one of claims 1 to 3, being **characterized in that** a position sensor (20 - 23) is associated to each of the gear actuators (1 - 4).

5. Gear actuation control device according to one of claims 1 to 4, being **characterized in that** the switching valve means (6) is a 16/2 directional valve, being fluidly interposed between the actuator valve means (5) and the gear actuators (1 - 4).

6. Gear actuation control device according to one of claims 1 to 5, being **characterized in that** the actuator valve means (5) is fluidly interposed between an oil pressure source (19) and the switching valve means (6).

7. Gear actuation control device according to one of claims 1 to 5, being **characterized in** a magnet (25) being fixed to each to the pistons (1' - 4') and cooperating with a position sensor in order to determine the position of the piston (1' - 4').

8. Gear actuation control device according to one of claims 1 to 7 being **characterized in that** the number of actuator valves (7 - 10) is twice as big as the number of gear actuators (1 - 4).
